# EUROPÄISCHE PATENTSCHRIFT

(11) **EP 2 218 908 B1**
(45) Veröffentlichungstag und Bekanntmachung des Hinweises auf die Patenterteilung: **21.05.2014**
(21) Anmeldenummer: 10001350.7
(22) Anmeldetag: 10.02.2010
(51) Int. Cl.: F03D 11/00

(54) **Windenergieanlage mit einer Arretierung eines Blattes**
Wind turbine with a blocking device of a rotor blade
Eolienne avec un dispositif d'arrêt d'une pale

(30) Priorität: 12.02.2009 DE 102009008607
(43) Veröffentlichungstag der Anmeldung: 18.08.2010
(73) Patentinhaber: Nordex Energy GmbH, 22419 Hamburg (DE)
(72) Erfinder: Wedekind, Christian, 22851 Norderstedt (DE); Porstmann, Roberto, 01259 Dresden (DE); Göpfert, Ulf, 18057 Rostock (DE); Wünsch, Ronny, 18233 Neubukow (DE)
(74) Vertreter: Hauck Patent- und Rechtsanwälte

(56) Entgegenhaltungen:
- DE-C1- 10 031 472
- DE-U1-202005 013 329

## Beschreibung

Die vorliegende Erfindung betrifft eine Vorrichtung zur Arretierung eines Rotorblatts einer Windenergieanlage, die eine Verstelleinrichtung für den Blatteinstellwinkel des Rotorblatts aufweist. Die Verstelleinrichtung besitzt einen Antrieb, der einen Motor und ein Getriebe aufweist, wobei eine Antriebswelle des Getriebes eine Außenverzahnung trägt.

Aus DE 100 31 472 C1 ist eine Vorrichtung zur Arretierung einer von einem Rotor angetriebenen Welle einer Windkraflanlage bekannt. Zur Arretierung ist eine Scheibe auf der angetriebenen Welle vorgesehen, die als Zahnscheibe ausgebildet wird. Ein Arretierelement besitzt einen Vorsprung, der zwischen zwei Zähnen der Zahnscheibe eintaucht.

Aus DE 10 2004 017 323 A1 ist eine Arretiereinrichtung für ein im Wesentlichen spielfreies Halten des Rotorblatts in einer eingestellten Winkelstellung bekannt. Die Arretiereinrichtung besitzt eine Spannkulisse und eine Spannvorrichtung, wobei die Spannvorrichtung mit dem Rotorblatt gekoppelt ist und die Spannkulisse ortsfest an der Rotornabe angeordnet ist. In einer vorbestimmten Winkelposition, in der das Rotorblatt arretiert werden soll, gelangen die Spannvorrichtung und die Spannkulissc in Eingriff und arretieren so das Rotorblatt.

Aus DE 31 10263 C2 ist eine hydraulisch betätigte Blatteinstellvorrichtung bekannt. Hierbei sind die Blattfüße jeweils mit einer Nut in ihrem Umfang versehen. Eine Segelstellungsverriegelungsvorrichtung ist neben dem Blattumfang angeordnet und weist ein Verriegelungselement auf, das durch eine Feder zu dem Blattfuß hin vorgespannt ist. Das Veriiegelungselement wird hydraulisch betätigt und taucht in die Nut am Blattfuß.

Aus EP 1 029 176 B1 ist eine Windkraftanlage bekannt, bei der eine Verstellung der Rotorblattposition durch eine bei Ausfall der Leistungsversorgung des Antriebs aktivierbare Sperre erfolgt. Die Sperre verhindert in ihrem aktivierten Zustand ein Verdrehen der Rotorblätter, lässt aber ein Verdrehen der Rotorblätter in die Segelstellung zu.

Bei Windenergieanlagen müssen an der Rotornabe gelegentlich verschiedene Wartungsarbeiten durchgeführt werden. Um das Wartungspersonal vor Verletzungen durch rotierende Teile zu schützen, ist häufig auch vorgesehen, die Blätter über die Bremse der Antriebsmotoren in ihrer Position festzustellen, was jedoch den Nachteil hat, dass kein formschlüssiges Festsetzen der Position erfolgt, und dies bei Wartungsarbeiten an der Bremse nicht möglich ist.

Der Erfindung liegt die Aufgabe zugrunde, eine Windenergieanlage mit einer Arretiervorrichtung für ein Rotorblatt bereitzustellen, die mit einfachen Mitteln eine zuverlässige und wirksame Feststellung des Rotorblatts in jeder beliebigen Position erlaubt.

Erfindungsgemäß wird die Aufgabe durch eine Windenergieanlage mit einer Arretiervorrichtung gemäß Anspruch 1 gelöst. Vorteilhafte Ausgestaltungen bilden die Gegenstände der Unteransprüche.

Die erfindungsgemäße Windenergieanlage besitzt eine Vorrichtung zur Arretierung eines Rotorblatts. Die Windenergieanlage besitzt eine Verstelleinrichtung für den Blatteinstellwinkel des Rotorblatts. Der Blatteinstellwinkel des Rotorblatts wird durch eine Drehung des Rotorblatts um seine Längsachse verändert. Die Verstelleinrichtung besitzt einen Antrieb, bestehend aus einem Motor und einem Getriebe, wobei die Abtriebswelle des Motors über eine Welle-Nabe-Verbindung mit der Antriebswelle des Getriebes verbunden ist. Die Antriebswelle des Getriebes weist eine Außenverzahnung auf. Erfindungsgemäß ist ein um seine Längsachse drehbar gelagerter Arretierstift vorgesehen, der in einer arretierten Position in die Außenverzahnung eingreift und in seiner nichtarretierten Position die Außenverzahnung freigibt. Der Arretierstift besitzt einen Endabschnitt, dessen freies Ende exzentrisch zur Längsachse des Arretierstifts steht. Wird der erfindungsgemäße Arretierstift in seine arretierte Position gebracht, so greift der Endabschnitt des Arretierstifts in die Außenverzahnung ein und arretiert auf diese Weise die Position des Rotorblatts. Der exzentrisch ausgebildete Endabschnitt des Arretierstifts bietet den Vorteil, dass, wenn das freie Ende des Arretierstifts auf einen Zahn der Außenverzahnung trifft, dieses durch die drehbare Lagerung des Arretierstifts verdreht werden kann, so dass das freie Ende des Endabschnitts zwischen den Zähnen in die Außenverzahnung eingreift. Aufgrund der drehbaren Lagerung des Arretierstifts beschreibt die Spitze des Arretierstifts eine kreisbogenförmige Bewegung. Diese stellt aufgrund eines erzwungenen Vorschubs sicher, dass das freie Ende in den Zwischenraum zwischen zwei Zähnen eingreift. Auch kann damit ein hohes Moment einer eingefallenen Bremse überwunden werden.

In einer bevorzugten Ausgestaltung der Erfindung ist die Längsachse des Arretierstifts radial zur Antriebswelle ausgerichtet. Der Arretierstift bewegt sich folglich zwischen seiner arretierenden Position und seiner nichtarretierenden Position in radialer Richtung.

In einer bevorzugten Ausgestaltung ist die Außenverzahnung als Spitzverzahnung ausgeführt. Der Endabschnitt des Arretierstifts besitzt bevorzugt eine zur Spitzver-zahnung passende Gegenform. Durch die aufeinander abgestimmten Formen von Endabschnitt und Spitzverzahnung ist es möglich, dass der in die Zähne eintauchende Endabschnitt des Arretierstifts einen Teil der Kraft auf die Wangen der Zahnflanken verteilt.

In einer besonders bevorzugten Ausgestaltung ist in der arretierten Position der Arretierstift in einer durchgehenden Bohrung angeordnet, die sich in radialer Richtung zur Antriebswelle erstreckt. Die Bohrung kann an ihrem von der Antriebswelle fortweisenden Ende ein Innengewinde besitzen. Alternativ ist es auch möglich, dass eine Hülse mit einem Innengewinde in die Bohrung an dem von der Antriebswelle fortweisenden Ende eingesetzt ist.

In einer besonders bevorzugten Ausgestaltung ist der Arretierstift auch in der nichtarretierten Position in der Bohrung angeordnet und durch ein Federelement in seiner nichtarretierten Position vorgespannt. Der besondere Vorzug bei dieser Ausgestaltung ist, dass aufgrund des Federelements der Arretierstift von der Außenverzahnung ferngehalten wird und so ein unbeabsichtigtes Arretieren verhindert wird.

Besonders bevorzugt weist der Arretierstift einen Kopfabschnitt auf, der zu einer formschlüssigen Verbindung mit einem Kopf eines Bedienwerkzeugs vorgesehen ist. Dabei kann es sich beispielsweise um einen Außensechskant oder einen Innensechskant handeln.

Bei einer vorteilhaften Ausgestaltung der Erfindung besitzt das Bedienwerkzeug einen länglichen Abschnitt mit einem Außengewinde, an dessen Ende der Werkzeugkopf zur formschlüssigen Verbindung mit dem Arretierstift vorgesehen ist. Der Werkzeugkopf besitzt einen Durchmesser der kleiner als der Innendurchmesser der Bohrung und der Hülse ist und das Außengewinde entspricht dem in der Hülse und/oder im Vorsprung vorgesehenen Innengewinde. Bei der Bedienung wird das Bedienwerkzeug in die Bohrung oder die Hülse eingeschraubt. Der Kopf des Bedienwerheugs greift in den drehbar gelagerten Arretierstift in der Bohrung ein und dreht diesen in die arretierende Position. Der exzentrische Endabschnitt beschreibt hierbei eine wendelförmige Bewegung, so dass der Arretierstift zwischen zwei Zähnen eingreifen kann.

Während in der vorstehend beschriebenen ersten Ausgestaltung der Arretierstift auch in der nicht arretierenden Position in der Bohrung verbleibt, ist in der zweiten Ausgestaltung der Arretierstifts mit einem Arretierwerkzeug verbunden. Das Arretierwerkzeug besitzt einen länglichen Abschnitt mit einem Außengewinde, das dem Innengewinde der Bohrung bzw. der Hülse entspricht. Bei der Verwendung des Arretierwerkzeugs wird das Arretierwerkzeug mit seinem Außengewinde in das vorhandene Innengewinde eingeschraubt und bewegt sich auf diese Weise in seine arretierende Position.

Bevorzugt ist in der arretierten Position das Werkzeug ins Innengewinde geschraubt und der Endabschnitt des Arretierwerkzeugs greift in die Außenverzahnung ein.

Die vorliegende Erfindung wird nachfolgend anhand von zwei Ausführungsbeispielen näher erläutert.

Es zeigen:
- Fig. 1: einen Querschnitt durch eine Arretiervorrichtung, bei der der Arretier- stift dauerhaft in einer Bohrung verbleibt und Arretierstift sowie dessen Werkzeug zweiteilig ausgebildet sind,
- Fig. 2: einen Querschnitt einer Arretienrornchtung, bei der der Arretierstift mit dem Arretierwerkzeug einstückig ausgebildet ist,
- Fig. 3: die Arretiervorrichtung aus Fig. 1 in einer vergrößerten Ansicht mit einem zurückgezogenen Arretierstift und
- Fig. 4: in einer Übersichtsskizze einen Pitchantrieb für die Arretiervorrichtung.

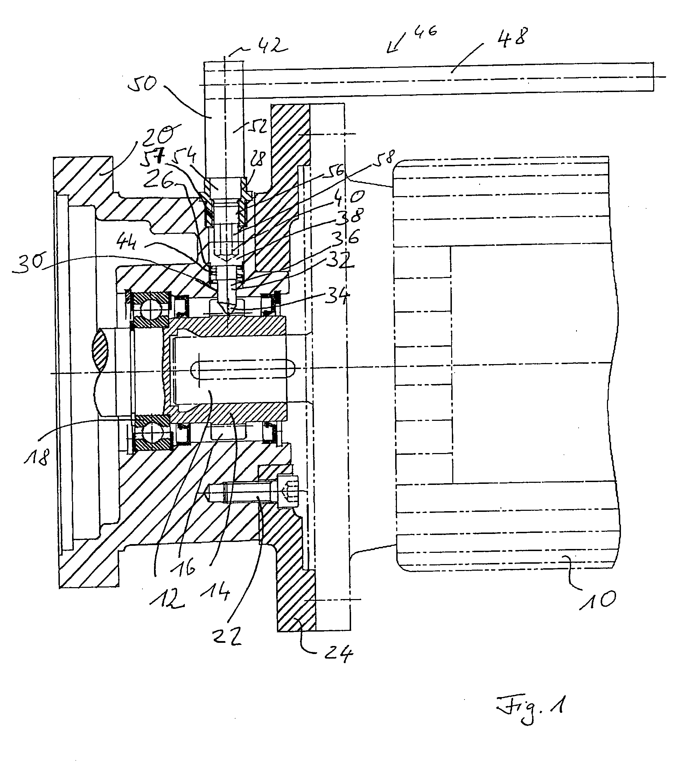

Fig. 1 zeigt die Arretiervorrichtung in der Seitenansicht. Der Motor 10 wird mit dem Getriebeeingangsflansch 24 verschraubt, welcher über Schrauben 22 mit dem Getriebegehäuse 20 verbunden ist. Die Getriebeantriebswelle 14 ist über das Lager 18 im Getriebegehäuse gelagert. Die Abtriebswelle 12 des Motors 10 ist über eine Welle-Nabe-Verbindung mit der Antriebswelle 14 des Getriebes gekoppelt. Die auf der Getriebeantriebswelle befindliche Außenverzahnung 16 ist als Spitzverzahnung ausgeführt.

Das Getriebegehäuse 20 besitzt eine radial zur Drehachse der Welle 12 weisende Bohrung 26, in die eine Hülse 28 von außen eingesetzt ist. Die Hülse 28 besitzt ein Außengewinde über das die Hülse 28 in ein entsprechendes Innengewinde der Bohrung 26 geschraubt ist. Die Bohrung 26 besitzt an ihrem zur Außenverzahnung 16 weisenden Ende einen Absatz 30, in dem sich der Innendurchmesser verjüngt.

In die Bohrung 26 eingesetzt ist ein Arretierstift 32, der einen Endabschnitt 34, einen Schaft 36 und einen Kopfabschnitt 38 besitzt. Der Kopfabschnitt 38 besitzt einen Innensechskant 40 zur Aufnahme eines Werkzeugkopfes.

Der Endabschnitt 34 des Ametierstifts 32 besitzt eine abgerundete Spitze, die gegenüber der Längsachse 42 des Arretierstifts versetzt angeordnet ist. Wie in Fig. 1 zu erkennen, taucht der exzentrische Endabschnitt 34 zwischen zwei Zähnen der Außenverzahnung 16 ein.

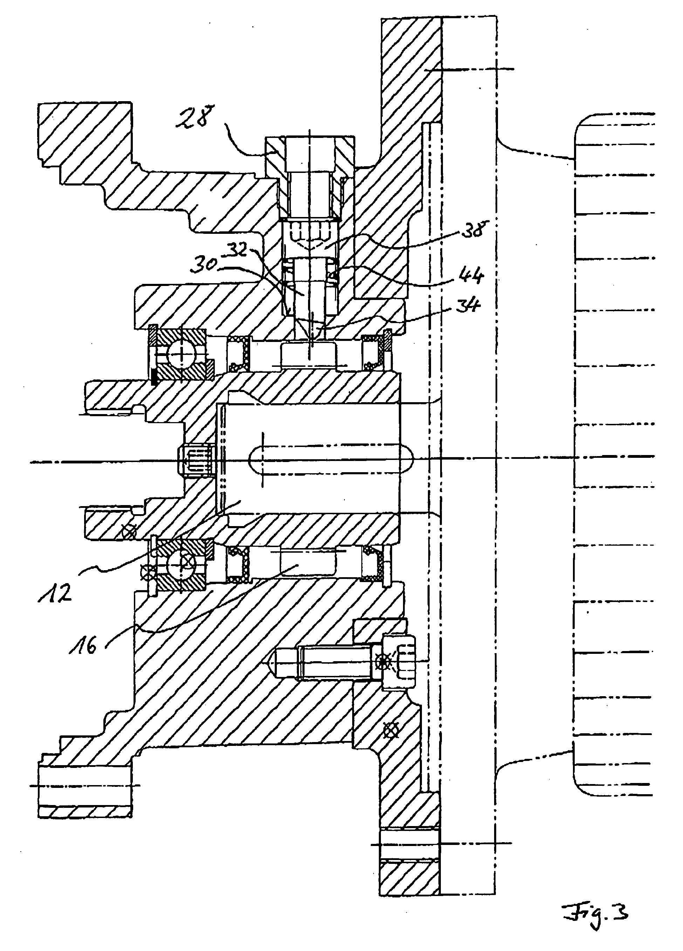

Der Arretierstift 32 ist über eine Feder 44 in der Bohrung 26 gelagert. Die Feder 44 liegt an der zur Antriebswelle weisenden Seite des Kopfes 38 des Arretierstifts an und drückt diesen aus der in Fig. 1 dargestellten arretierenden Position heraus. Fig. 3 zeigt unter Verwendung gleicher Bezugszeichen den Arretierstift 32 in seiner durch die Feder 44 zurück gedrückten Position.

Ein in Fig. 1 dargestelltes Werkzeug 46 besitzt einen Stiel 48, der an seinem einen Ende mit einem Hand/griff versehen sein kann. Unter einem 90° Winkel ist der Stiel 48 mit einem Werk-zeugstiel 50 verbunden. Der Werkzeugstiel 50 besitzt einen oberen Abschnitt 52, dessen Außendurchmesser ungefähr dem Durchmesser der eingesetzten Hülse 28 entspricht. An diesen Abschnitt 52 schließt sich ein Abschnitt 54 an, der einen geringeren Durchmesser besitzt. Der Abschnitt 56 ist mit einem Außengewinde 57 versehen, das mit einem Gewinde der Hülse 28 zusammenwirkt. An den Gewindeabschnitt 56 schließt sich ein Werkzeugkopf 58 an, der in den Arretierstift eingreift.

Bei der Verwendung des Werkzeugs 46 wird dieses mit seinem Gewindeabschnitt 56 in die Hülse 28 eingeschraubt. Bei dem Einschrauben greift der Werkzeugkopf 58 in den Arretierstift und bewegt diesen drehend mit zunehmendem Einschrauben unter einem vom Gewindeabschnitt erzeugten Vorschub gegen die Federkraft 44 in die arretierende Stellung. Dabei beschreibt das Ende 34 des Arretierstifts eine wendelförmige Bewegung, die sicherstellt, dass der Arretierstift nicht auf die Spitze eines Zahns der Außenverzahnung 16 aufsetzt, sondern zwischen zwei Zähne eintaucht.

Ein besonderer Vorteil der in Fig. 1 dargestellten Arretiervorrichtung besteht darin, dass die Arretierung in jeder beliebigen Position des Rotorblatts bzw. der Antriebswelle erfolgen kann. Auch bei geschlossener Bremse des Getriebemotors ist eine Arretierung möglich, da ein manuelles Drehen des Rotorblatts in eine vorbestimmte Position nicht erforderlich ist. Mit Hilfe des Werkzeugs kann das Bremsmoment der Bremse überwunden und die Welle in die richtige Position gedrückt werden. Ferner kann bei dem praktischen Einsatz leicht sichergestellt werden, dass die Arretierung lediglich von einem Rotorblatt erfolgt und nicht versehentlich mehrere Rotorblätter arretiert werden. Hierzu ist es erforderlich, dass lediglich ein Bedienwerkzeug 46 bei einer Windenergieanlage vorhanden ist. Darüber hinaus ist durch das Werkzeug 46 leicht für das Wartungspersonal zu erkennen, dass ein Rotorblatt arretiert ist.

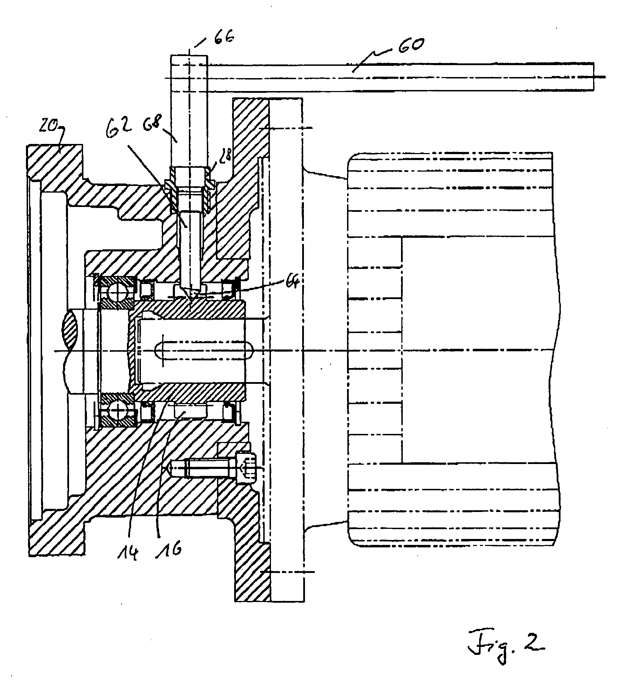

Fig. 2 zeigt eine alternative Ausgestaltung der Arretiervorrichtung. Der Hauptunterschied gegenüber der Ausführungsform aus Fig. 1 besteht darin, dass das Arretierwerkzeug 60 einstückig mit dem Arretierstift 62 ausgebildet ist. Der Arretierstift 62 besitzt an seinem Ende 64 eine exzentrische Spitze, deren freies Ende versetzt ist gegenüber der Längsachse 66. Das Werkzeug besitzt einen abgewinkelten Schaft 68, der mit einem Außengewinde 70 in eine Hülse 28 eingeschraubt ist. An den Gewindeabschnitt des Schafts 68 schließt sich der Arretierstift 62 an, der innerhalb einer Bohrung im Getriebegehäuse 20 geführt ist. Fig. 2 zeigt die arretierte Stellung, in der das Ende des Arretierstifts 62 zwischen zwei Zähne der Außenverzahnung 16 eintaucht.

Auch bei dieser Ausgestaltung treten die vorbeschriebenen Vorteile der Erfindung zu Tage. Insbesondere ist es auch hier möglich, das Rotorblatt in jeder beliebigen Position zu arretieren, so dass ein manuelles Verstellen des Rotorblatts zur Arretierung nicht mehr erforderlich ist. Da das Arretierwerkzeug 60 gemeinsam mit dem Arretierstift aus dem Getriebegehäuse entfernt wird, ist sichergestellt, dass es nicht zu einer unbeabsichtigten Arretierung des Rotorblatts kommt.

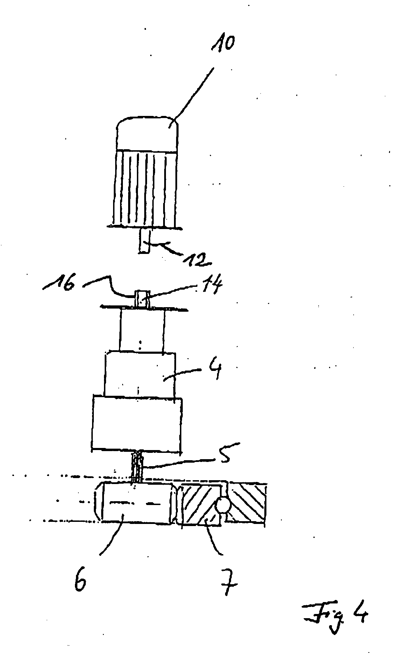

Fig. 4 zeigt in einer Übersichtsskizze den Aufbau eines Pitch-Antriebs für die vorstehend beschriebene Arretiervorrichtung. Der Pitch-Antrieb besteht aus dem Motor 10 mit dessen Abtriebswelle 12. Die Abtriebswelle 12 des Motors ist mit einer Antriebswelle 14 des Getriebes gekoppelt. Die Antriebswelle 14 des Getriebes trägt die Außenverzahnung 16. Über das Getriebe 4 mit einer Getriebeabtriebswelle 5 wird ein Ritzel 6 betätigt. Das Ritzel 6 kämmt in einer innenverzahnten Drehverbindung 7, durch die das Rotorblatt in seiner Position eingestellt werden kann. Die erfindungsgemäße Arretiervorrichtung sitzt dabei zwischen Motor und Getriebe und greift in die Außenverzahnung 16 der Getriebeantriebswelle 14 ein.

## Patentansprüche

1. Windenergieanlage mit einer Arretiervorrichtung für ein Rotorblatt und einer Verstelleinrichtung für den Blatteinstellwinkel des Rotorblatts, wobei die Verstelleinrichtung einen Antrieb mit einem Motor und einem Getriebe mit einer eine Außenverzahnung (16) tragenden Antriebswelle aufweist, **dadurch gekennzeichnet, dass**
- die Arretiervorrichtung einen um seine Längsachse drehbar gelagerten Arretierstift (32; 62) aufweist, der in einer arretierten Position in die Außenverzahnung (16) eingreift und in einer nichtarretierten Position die Außenverzahnung (16) freigibt,
- wobei der Arretierstift (32; 62) einen Endabschnitt (34; 64) aufweist, dessen freies Ende exzentrisch zur Längsachse (42; 66) des Arretierstifts (32; 62) steht.

2. Windenergieanlage nach Anspruch 1, **dadurch gekennzeichnet, dass** die Längsachse des Arretierstifts (32; 62) radial zur Antriebswelle steht.

3. Windenergieanlage nach Anspruch 1 oder 2, **dadurch gekennzeichnet, dass** die Außenverzahnung (16) eine Spitzverzahnung aufweist.

4. Windenergieanlage nach Anspruch 3, **dadurch gekennzeichnet, dass** der Endabschnitt des Arretierstifts eine Gegenform zur Spitzverzahnung aufweist.

5. Windenergieanlage nach einem der Ansprüche 1 bis 4, **dadurch gekennzeichnet, dass** in der arretierten Position der Arretierstift in einer durchgehenden Bohrung angeordnet ist, die sich in radialer Richtung zur Antriebswelle erstreckt.

6. Windenergieanlage nach Anspruch 5, **dadurch gekennzeichnet, dass** die Bohrung an ihrem von der Antriebswelle fortweisenden Ende ein Innengewinde aufweist.

7. Windenergieanlage nach Anspruch 5, **dadurch gekennzeichnet, dass** eine Hülse (28) mit einem Innengewinde in die Bohrung an dem von der Antriebswelle fortweisenden Ende eingesetzt ist.

8. Windenergieanlage nach einem der Ansprüche 1 bis 7, **dadurch gekennzeichnet, dass** in der nichtarretierten Position der Arretierstift (32; 62) in der Bohrung angeordnet ist und durch ein Federelement (44) in seine nichtarretierte Position gedrückt wird.

9. Windenergieanlage nach Anspruch 8, **dadurch gekennzeichnet, dass** der Arretierstift (32; 62) einen Kopfabschnitt aufweist, der zu einer formschlüssigen Verbindung mit einem Kopf eines Bedienwerkzeugs (46) vorgesehen ist.

10. Windenergieanlage nach Anspruch 8 oder 9, **dadurch gekennzeichnet, dass** das Bedienwerkzeug (46) einen Schaft (50) mit einem Außengewinde aufweist, an dessen Ende der Kopf vorgesehen ist, wobei der Kopf einen Außendurchmesser besitzt, der kleiner als der Innendurchmesser der Bohrung und der Hülse ist und, dass das Außengewinde in das Innengewinde der Hülse oder der Bohrung eingreift.

11. Windenergieanlage nach einem der Ansprüche 1 bis 7, **dadurch gekennzeichnet, dass** der Arretierstift (32; 62) mit einem Arretierwerkzeug (60) einstückig verbunden ist, das einen Schaft (68) mit einem Außengewinde aufweist, das dem Innengewinde der Bohrung und/oder der Hülse entspricht.

12. Windenergieanlage nach Anspruch 11, **dadurch gekennzeichnet, dass** in der arretierten Position das Arretierwerkzeug (60) in das Innengewinde geschraubt ist und der Endabschnitt des Arretierstifts (32; 62) in die Außenverzahnung (16) eingreift.

## Claims

1. A wind turbine comprising a locking device for a rotor blade and an adjustment system for the pitch angle of the rotor blade, wherein the adjustment system has a drive comprising a motor and a gearbox with a drive shaft supporting an external toothing (16), **characterized in that**
- the locking device has a locking pin (32; 62) mounted rotatably around its longitudinal axis which in a locking position engages with the external toothing (16) and in an unlocked position releases the external toothing (16),
- wherein the locking pin (32; 62) has an end section (34; 64) the free end of which stands eccentric to the longitudinal axis (42; 66) of the locking pin (32; 62).

2. The wind turbine according to claim 1, **characterized in that** the longitudinal axis of the locking pin (32; 62) is radial with respect to the drive shaft.

3. The wind turbine according to claim 1 or 2, **characterized in that** the external toothing (16) has a V-toothing.

4. The wind turbine according to claim 3, **characterized in that** the end section of the locking pin has a complementary shape to the V-toothing.

5. The wind turbine according to one of the claims 1 to 4, **characterized in that** in the locking position the locking pin is arranged in a through hole, which extends in the radial direction with respect to the drive shaft.

6. The wind turbine according to claim 5, **characterized in that** the hole, on the end thereof pointing away from the drive shaft, has an internal thread.

7. The wind turbine according to claim 5, **characterized in that** a sleeve (28) with an internal thread is placed in the hole at the end pointing away from the drive shaft.

8. The wind turbine according to one of the claims 1 to 7, **characterized in that** in the unlocked position the locking pin (32; 62) is arranged in the hole and is pressed into the unlocked position thereof by a spring element (44).

9. The wind turbine according to claim 8, **characterized in that** the locking pin (32; 62) has a head section which is provided for a form-locking connection to a head of an operator tool (46).

10. The wind turbine according to claim 8 or 9, **characterized in that** the operator tool (46) has a shaft (50) with an external thread, at the end of which the head is provided, wherein the head has an outer diameter that is less than the inner diameter of the hole and the sleeve, and that the external thread engages with the internal thread of the sleeve or the hole.

11. The wind turbine according to one of the claims 1 to 7, **characterized in that** the locking pin (32; 62) is integrally connected to a locking tool (60) which has a shaft (68) with an external thread, which corresponds to the internal thread of the hole and/or the sleeve.

12. The wind turbine according to claim 11, **characterized in that** in the locking position the locking tool (60) is screwed into the internal thread and the end section of the locking pin (32; 62) engages with the external toothing (16).

## Revendications

1. Éolienne avec un dispositif d'arrêt pour une pale de rotor et un dispositif de réglage pour l'angle de pas de la pale de rotor, dans laquelle le dispositif de réglage comporte un entraînement avec un moteur et un engrenage avec un arbre d'entraînement portant une denture extérieure (16), **caractérisée en ce que**
- le dispositif d'arrêt comporte une tige d'arrêt (32 ; 62) montée de façon rotative autour de son axe longitudinal, laquelle s'engage dans la denture extérieure (16) dans une position arrêtée et libère la denture extérieure (16) dans une position non-arrêtée,
- dans laquelle la tige d'arrêt (32 ; 62) comporte une section finale (34 ; 64) dont l'extrémité libre est agencée de façon excentrique par rapport à l'axe longitudinal (42 ; 66) de la tige d'arrêt (32 ; 62).

2. Éolienne selon la revendication 1, **caractérisée en ce que** l'axe longitudinal de la tige d'arrêt (32 ; 62) est agencé radialement par rapport à l'arbre d'entraînement.

3. Éolienne selon la revendication 1 ou 2, **caractérisée en ce que** la denture extérieure (16) comporte une denture striée.

4. Éolienne selon la revendication 3, **caractérisée en ce que** la section finale de la tige d'arrêt présente une forme complémentaire de la denture striée.

5. Éolienne selon l'une des revendications 1 à 4, **caractérisée en ce que** dans la position arrêtée, la tige d'arrêt est agencée dans un perçage traversant s'étendant dans une direction radiale par rapport à l'arbre d'entraînement.

6. Éolienne selon la revendication 5, **caractérisée en ce que** le perçage comporte un filet intérieur à son extrémité détournée de l'arbre d'entraînement.

7. Éolienne selon la revendication 5, **caractérisée en ce qu'**une douille (28) avec un filet intérieur est insérée dans le perçage, à l'extrémité détournée de l'arbre d'entraînement.

8. Éolienne selon l'une des revendications 1 à 7, **caractérisée en ce que** dans la position non-arrêtée, la tige d'arrêt (32 ; 62) est agencée dans le perçage et pressée dans sa position non-arrêtée par un élément élastique (44).

9. Éolienne selon la revendication 8, **caractérisée en ce que** la tige d'arrêt (32 ; 62) comporte une section de tête prévue pour une liaison par complémentarité de forme avec une tête d'un outil de travail (46).

10. Éolienne selon la revendication 8 ou 9, **caractérisée en ce que** l'outil de travail (46) comporte un corps (50) avec un filet extérieur, à l'extrémité duquel est prévue la tête, dans laquelle la tête présente un diamètre extérieur inférieur au diamètre intérieur du perçage et de la douille, et **en ce que** le filet extérieur s'engage dans le filet intérieur de la douille ou du perçage.

11. Éolienne selon l'une des revendications 1 à 7, **caractérisée en ce que** la tige d'arrêt (32 ; 62) est reliée d'un seul tenant avec un outil d'arrêt (60) comportant un corps (68) avec un filet extérieur correspondant au filet intérieur du perçage et/ou de la douille.

12. Éolienne selon la revendication 11, **caractérisée en ce que** dans la position arrêtée, l'outil d'arrêt (60) est vissé dans le filet intérieur et la section finale de la tige d'arrêt (32 ; 62) s'engage dans la denture extérieure (16).
